# EUROPEAN PATENT APPLICATION

(11) **EP 2 881 819 A1**
(43) Date of publication of application: **10.06.2015**
(21) Application number: 13825766.2
(22) Date of filing: 02.08.2013
(51) Int. Cl.: G05B 19/418

(54) **PRODUCT MANAGEMENT METHOD, PRODUCT MANAGEMENT DEVICE, PRODUCT MANAGEMENT SYSTEM, AND PROGRAM**

(30) Priority: 03.08.2012 JP 2012172700
(71) Applicant: NEC Corporation, Tokyo 108-8001 (JP)
(72) Inventor: TAKAHASHI Toru, Tokyo 108-8001 (JP); ISHIYAMA Rui, Tokyo 108-8001 (JP)
(74) Representative: Vossius & Partner Patentanwälte Rechtsanwälte mbB
(86) International application number: PCT/JP2013/070986
(87) International publication number: WO 2014/021448

(57) **Abstract**

Provided is to manage distribution of a product equipped with a component using dissimilarity on a surface of the component caused by differences between parameters in a manufacturing device and a manufacturing step. In the present invention, clustering a distribution information log database in which an image feature of a pattern formed on a surface of a component is related with at least one of product information regarding a product equipped with the component and distribution information regarding distribution of the product, based on the image feature; and analyzing, using statistical processing, one or both of the distribution information and product information related with the image feature belonging to each group obtained by the clustering.

## Description

### [Technical Field]

The present invention relates to a product management method, a product management device, a product management system, and a program.

### [Background Art]

In recent years, it has been performed that various parameters of a component in a manufacturing step, including a manufacturing environment for the component, such as temperature and humidity, and identification numbers of a mold, a manufacturing device, and the like, are recorded for quality control of the component. Thus, when an abnormal yield of a component or a defective product occurs, analysis is made using the recorded parameters in order to investigate a cause of the abnormality or the defect. Patent Literature 1 discloses an example of such a technique. The following is a description of the technique of Patent Literature 1.

In Patent Literature 1, values of respective items, including a parameter characterizing a manufacturing step, such as equipment and a measurement instrument used for manufacturing a component, an environmental condition such as temperature and humidity, a supplier of a used raw material, and the time of manufacturing, are maintained as performance data of the component. First, evaluation is made regarding similarity of the values of the respective items between different manufacturing lots. Next, a plurality of representative points are determined throughout the respective items such as equipment and a measurement instrument to evaluate similarity of the plurality of representative points to the values of the respective items in each manufacturing lot. Then, a result of the evaluation is used to specify a manufacturing device or a manufacturing step causing abnormality or a defect.

### [Citation List]

### [Patent Literature]

**[PTL 1]** Japanese Unexamined Patent Application Publication No. 2012-094016 **[Summary of Invention]**

### [Technical Problem]

As described above, for example, as in Patent Literature 1, there is a technique for performing quality control in which differences between various parameters in a manufacturing device and a manufacturing step are used to investigate a cause of abnormality or a defect of a component caused by the differences there between. However, there has been no technique for managing distribution of a product equipped with the component using dissimilarity caused by the differences between various parameters in a manufacturing device and a manufacturing step.

Accordingly, a subject to be solved by the invention of the present application is to provide a technique for managing distribution of a product equipped with a component using dissimilarity on a surface of the component caused by differences between parameters in a manufacturing device and a manufacturing step.

### [Solution to Problem]

A product management method includes
clustering a distribution information log database in which an image feature of a pattern formed on a surface of a component is related with at least one of product information regarding a product equipped with the component and distribution information regarding distribution of the product, based on the image feature; and
analyzing, using statistical processing, one or both of the distribution information and product information related with the image feature belonging to each group obtained by the clustering.

### [Advantageous Effects of Invention]

The invention of the present application allows distribution of a product to be managed using dissimilarity on the product caused by differences between various parameters in a manufacturing device and a manufacturing step.

### [Brief Description of Drawings]

[Fig. 1] Fig. 1 is a block diagram depicting an example of a management system according to the present invention.
[Fig. 2] Fig. 2 is a diagram illustrating a sand-pear-skin pattern of a leather product.
[Fig. 3] Fig. 3 is diagrams illustrating clustering.
[Fig. 4] Fig. 4 is a flowchart illustrating an operation of the invention of the present application.
[Fig. 5] Fig. 5 is a diagram illustrating a component and a sand-pear-skin pattern.
[Fig. 6] Fig. 6 is a diagram illustrating a product.
[Fig. 7] Fig. 7 is a diagram illustrating generation of a distribution log database 11 according to the present exemplary embodiment.
[Fig. 8] Fig. 8 is a block diagram depicting an example of a registration device.
[Fig. 9] Fig. 9 is a diagram depicting an example of a map display.
[Fig. 10] Fig. 10 is an example of the distribution log database 11.
[Fig. 11] Fig. 11 is an example of a collation device.
[Fig. 12] Fig. 12 is an example of a map display.
[Fig. 13] Fig. 13 is an example of the distribution log database 11.
[Fig. 14] Fig. 14 is an example of the distribution log database 11.

### [Description of Embodiments]

The present invention relates to managing distribution of a product. The present invention focuses on a fact that a pattern (an uneven pattern) on a surface of a component is subtly different in each component depending on a manufacturing process or processing of the component, or a fact that, as be described later, the same kind of components has a certain degree of commonality in a pattern. The present invention is characterized by managing distribution of a product by identifying a component or a product equipped with the component using dissimilarity between the patterns. In order to describe characteristics of the present invention in detail, a specific description will be provided below with reference to the drawings.

### (First exemplary embodiment)

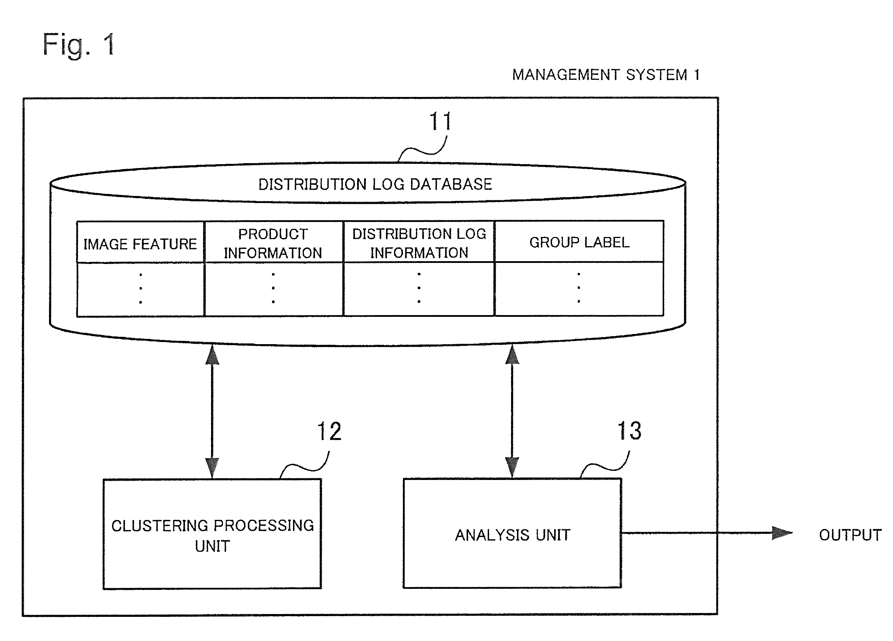

Fig. 1 is a block diagram of a management system 1 according to the present invention. The management system 1 according to the present invention includes a distribution log database 11, a clustering processing unit 12, and an analysis unit 13. The distribution log database 11 stores image feature information of a component in a product, product information, distribution log information, and group label information being related with one another.

A component managed using the present invention is not limited to a specific component as long as a pattern on a predetermined region of a surface of the component is characteristic. Specific examples of the component include: a component purchased as a finished product by a general consumer, such as a TV set, a personal computer, a smart phone, and a bag, a component used in a finished product (for example, a fastening product, a fixing tool, a decoration component, and an electronic component such as a semiconductor), and the like. A material of the component is metal, plastic, resin, leather, chinaware, ceramic, or the like. Herein, the fastening product is a slide fastener, a hook-and-loop fastener, a snap fastener, a rail fastener, a buckle, a cord stopper, a belt adjuster, a snap button, a button, or the like. In addition, the fixing tool is a caulking rivet, a grommet, a screw, a nail, a bolt, a nut, or the like.

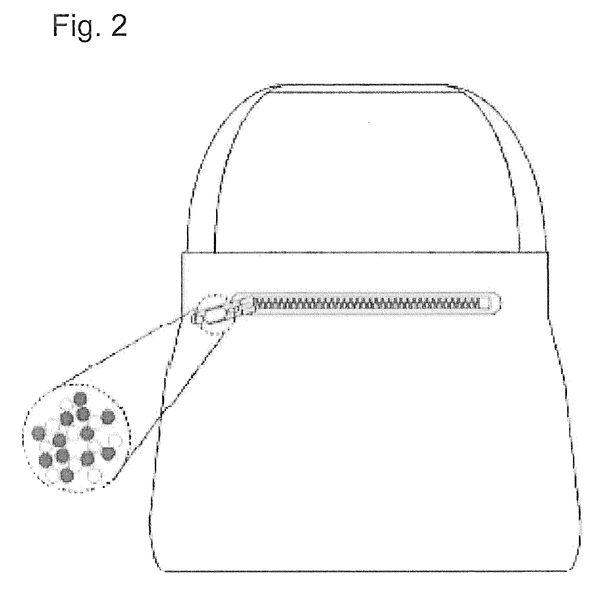

Further, examples of the pattern include not only a sand-pear skin pattern and the like formed as a design but also a pattern intentionally formed on a collation region for identification or collation of an article. Furthermore, the pattern is a concept including, in addition to the sand-pear-skin pattern formed by performing a processing treatment described later on metal, synthetic resin (such as plastic), or the like, for example, a wrinkle pattern (emboss) obtained by performing a surface treatment (such as emboss processing) on a leather product and a pattern formed by blasting, etching, powder coating, or the like. For example, as depicted in Fig. 2, in the case of a leather bag subjected to emboss processing, the bag has a leather surface with minute concavities and convexities randomly formed thereon. The minute concavities and convexities can be regarded as being the same as the sand-pear-skin pattern.

As described above, many fastening products and leather products are subjected to sand-pear-skin pattern processing or emboss processing. Additionally, a package surface of an electronic component is also often subjected to sand-pear-skin processing. These patterns can be identified per group of individuals or per individual piece, for example, by a processing treatment method on metal, synthetic resin (such as plastic), or the like. The identification method can be considered to be roughly classified into two methods.

One of the methods is a method in which the pattern is processed on a mold in advance and then a component is produced by a press molding, ejection molding, or casting using the mold, so that the pattern is formed on the component. In a component manufacturing method using a mold, a substantially same pattern can be formed on all individuals produced from the same mold. On the other hand, when another mold is created, the sand-pear-skin pattern of the created mold is made to be different from the sand-pear-skin pattern of the above-mentioned mold. In this manner, a pattern of a component manufactured by ejection molding or casting using the mold becomes different from a pattern of a component manufactured from the other mold. Accordingly, identification as to whether or not a pattern of a component is formed by the same mold can be made as follows. Specifically, at least one or more of a group of individuals (a group of articles) with a pattern formed by a certain mold are selected, and an image feature of a pattern on a predetermined region of the individual piece is recorded as a representative value that is to be an identification reference in a storage device. Then, a component having the image feature matching the registered image feature can be identified as a component with the pattern formed by the same mold as the component having the registered image feature.

This method is advantageous in that a group of individuals (a group of articles) produced from a specific mold can be identified to some extent by a small amount of registered data.

The other method is a method in which a pattern is formed on a component by a technique of forming a pattern of random and minute concavities and convexities on a component surface of each individual component piece by processing such as etching, blasting, cutting, crystallization-powder coating, and dispersion plating, or a technique of forming a minute concave and convex pattern on a component surface by plating processing or coating processing. In this case, the formed pattern is different among individual articles, thus, for each articles, an image feature of a pattern formed on a predetermined collation region of the component is registered in a storage device. Then, determination on matching or mismatching with the registered image feature allows identification of a component on an individual basis.

This method is effective in that, since the pattern is different among the individual components, a component can be identified on an individual basis.

Furthermore, the above-described two methods can be combined together. Specifically, coating or plating processing is performed on a component surface portion subjected to pattern-formation by a mold, thereby increasing individual difference due to a minute unevenness between components, so that identifiability of a component can be improved. In other words, while leaving characteristics of each mold, characteristics of individuals due to surface treatment processing are furthermore added, thereby allowing identification of each of both (the mold and the individual). Particularly, making coarser a size of concavities and convexities of surface processing performed on a mold as compared to latter-stage surface processing makes it possible to increase difference among patterns due to the mold as compared to difference in a pattern among individuals due to the latter-stage surface processing treatment. Thus, by setting a threshold value with respect to similarity of a feature amount in identification more moderately in identification of each mold than in identification of each individual, identification can be made using a small amount of registration data. Further, with use of the advantage, an amount of identification processing can be reduced by hierarchical identification.

Next, the predetermined region may be a region with an entire part or a part of a pattern as long as it is a region with the pattern formed thereon. Here, it is desirable to specify a predetermined region in considering easiness of identification processing. As for the predetermined region, by setting a reference portion commonly present on a component as a reference, it is considerable that a region in a position that can be specified based on the reference is set as a predetermined region. Examples of the reference portion of a component include a trademark, a logo, a name of a manufacturer, a manufacturing company, a brand name, a product name, a product number, and the like of a product attached, printed, stamped, or branded on the component. These reference portions have commonly the same pattern regardless of an individual as long as being the same component, and have characteristic appearance. Determining a position of such the reference portion and a posture of a component as references and storing features thereof allow automatic detection of a predetermined region. Further, on the predetermined region, it is desirable that the pattern is not affected by deterioration, abrasion, and the like, so that it is effective to use a concave region on the component.

In addition, there may be prepared a member (an adapter) to be fitted into a side of the component where the pattern is formed, and then a vacant wall (a hole) may be formed in a part of the member to allow visual recognition (photographing) of the pattern from outside so as to use the region allowing visual recognition (photographing) as a predetermined region. This can make it unnecessary to recognize the position of the predetermined region and the posture of the component every time identification is performed, and can ensure that the predetermined region is specified.

As for the image feature of the pattern, even on the same component piece, the image feature may vary depending on a lighting condition when photographing the pattern formed on the component. The reason is that the pattern is formed by minute concavities and convexities depending on a shape of the pattern and positions of shadows occurring due to the concavities and convexities become different depending on a direction of light applied, thus resulting in a different image feature. Accordingly, it is preferable that the previously-registered pattern and a pattern of a component as an identification target are photographed under the same lighting condition. This problem can be solved by mutually fixing positions and postures of a component, lighting, and an imaging element using adapters.

The product information is information that includes at least one of producer identification information, product identification information, and individual identification information of a product equipped with the above-described component. The producer identification information is identification information that uniquely identifies a producer who produces the product, such as a maker's name and a brand name. Note that the producer identification information represents a concept also including, for example, a shipping destination and a shipping date of the component, as the producer identification information. The product identification information is information that uniquely identifies the product including the component and that represents a product name, a model number, a production date, and a product shipping date or a product shipping period, for example. The individual identification number is identification information that individually identifies the product including the component, and an example thereof is a manufacturing lot number and a serial number.

The distribution log information is distribution circumstances information and collation information. The distribution circumstances information is information obtained by accumulating, as a log, distribution circumstances of the component or a product including the component, and information relating to distribution, such as a seller and a sale date in a process of distribution, a custom clearance date and a location, a place and a date of acquiring the image feature, a seller, a sale date, and a purchaser. The collation information is information regarding collation performed to determine authenticity of a product with a component having the image feature, and information such as a counterfeit inspection result of a product equipped with a component having the image feature, a place and a date of acquiring the image feature, a worker acquiring the image feature, information allowing identification from an external appearance of the product equipped with a component having the image feature, and the number of times of collation. Note that the product according to the present application is not particularly limited as long as being a product equipped with the above-described component. Further, the distribution log information may be overwritten to be updated when adding new distribution log information, but it is preferable to add an item.

The clustering processing unit 12 calculates a collation score of each pair of image features by matching between all combinations of pairs of all image features stored in the distribution log database 11. Then, the clustering processing unit 12 performs clustering of the image features based on the calculated collation scores. At this time, the clustering processing unit 12 calculates the collation score using a Markov Cluster Algorithm (Non-Patent Literature 1: Stijin van Dongon, Graph Clustering by Flow simulation., PhD thesis, University of Utrecht, May 2000) to cluster the image features. Then, the clustering processing unit 12 assigns a group label number to each group in order to uniquely identify a group generated by the clustering, relates each image feature with the group label number of group to which the image feature stored in the distribution log database 11 belong, and stores the group label number in the distribution log database 11.

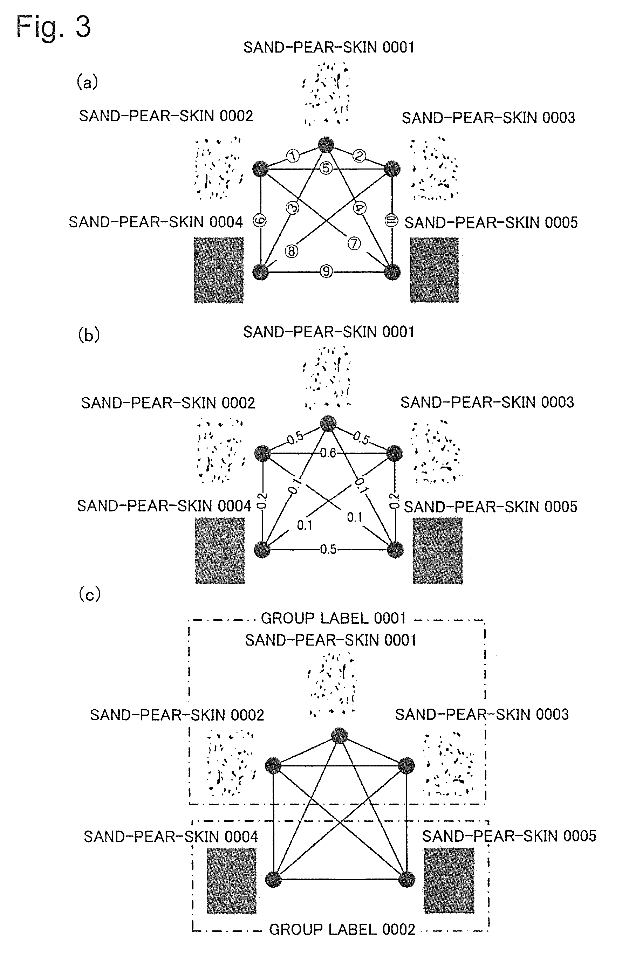

Herein below, an example will be used to describe clustering processing performed by the clustering processing unit 12. For example, it is assumed that the distribution log database 11 includes image features of sand-pear-skin patterns 0001 to 0005, as depicted in (a) of Fig. 3. The clustering processing unit 12 calculates the collation score of each pair present regarding the image features 0001 to 0005. In the example depicted in (a) of Fig. 3, there are 10 pairs of being 0001 and 0002, 0001 and 0003, 0001 and 0004, 0001 and 0005, 0002 and 0003, 0002 and 0004, 0002 and 0005, 0003 and 0004, 0003 and 0005, and 0004 and 0005. Herein, the collation scores of the respective pairs are assumed to be set as depicted in (b) of Fig. 3:
0001 and 0002: 0.5,
0001 and 0003: 0.5,
0001 and 0004: 0.1,
0001 and 0005: 0.1,
0002 and 0003: 0.6,
0002 and 0004: 0.2,
0002 and 0005: 0.1,
0003 and 0004: 0.1,
0003 and 0005: 0.2, and
0004 and 0005: 0.5.

Then, scores between 0001, 0002, and 0003 are 0.5 to 0.6, and the score between 0004 and 0005 is 0.5. Thus, as depicted in c) of Fig. 3, clustering forms two groups: a group of 0001, 0002, and 0003 and a group of 0004 and 0005. The clustering processing unit 12 assigns a group label number "0001" to the group of 0001, 0002, and 0003, and a group label number "0002" to the group of 0004 and 0005.

Herein, the description has been made for the clustering processing using the Markov Cluster Algorithm. Instead of this, another method for clustering may be used, such as a K-means method or a hierarchical clustering method (Non-Patent Literature 2: Masatoshi Okutomi, Masao Shimizu, et al., ed.: "Digital Image Processing", CG-ARTS Society, issued on March 1, 2006, p. 231-232).

The analysis unit 13 analyzes, for each group, at least one of the distribution information and the product information related with the image feature belonging to each group formed by the clustering, and displays a map of a result of the analysis.

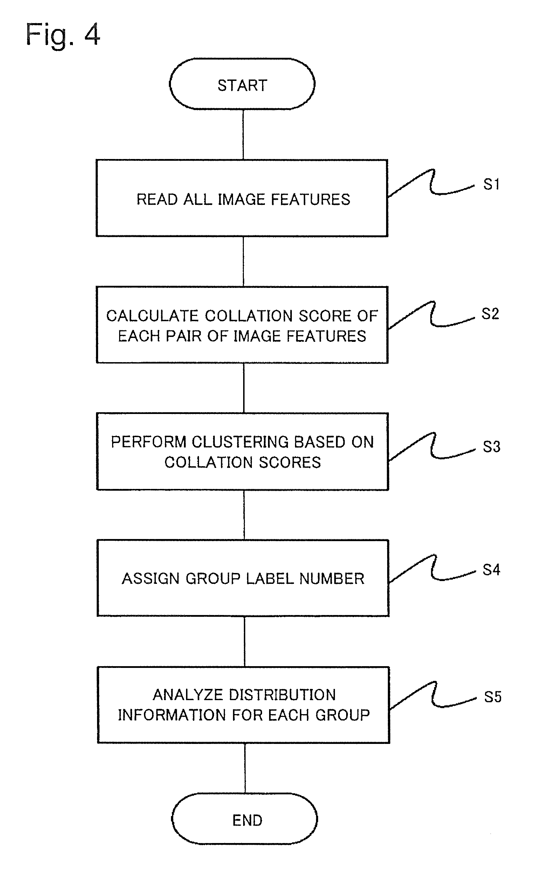

Next, an operation of the invention of the present application will be described. Fig. 4 is a flowchart illustrating the operation of the invention of the present application.

Regarding the image features in the distribution log database 11, it is assumed that, upon manufacturing or shipping of a component, a component supplier causes a computer to acquire an image on a predetermined region of the component, and the image feature generated by the computer using the acquired image is stored in the distribution log database 11. Further, regarding the product information, it is assumed that, when a producer equips a product with a component supplied from a component supplier, the production information stored by relating with the image feature of the component is stored in the distribution log database 11. Regarding the distribution log information, for example, it is assumed that the collation information and the distribution circumstances information stored by a manager of a customs office or the like upon customs clearance of a product are stored as the distribution log information in the distribution log database 11.

The clustering processing unit 12 reads all image features stored in the distribution log database 11 (step S1).

The clustering processing unit 12 calculates the collation score of each pair of image features by matching between all combinations of the image features (step S2).

The clustering processing unit 12 clusters the image features based on the calculated collation scores to make grouping of the image features (step S3).

The clustering processing unit 12 assigns the group label number to each generated group and relates the group label numbers with each of the image features stored in the distribution log database 11 to store the group label numbers (step S4).

The analysis unit 13 analyzes the distribution information related with the image features belonging to each of the clustered groups by statistical processing and visualizes a result of the analysis (step S5).

According to the present invention, distribution of a product equipped with a component is managed using dissimilarity between component surfaces (differences between individuals) caused by differences between parameters in a manufacturing device and a manufacturing step.

Further, when clustering of products is performed using parameters in a manufacturing device and a manufacturing step, there are usually many kinds of parameters to be recorded, making it difficult to record all of the various kinds of parameters. Furthermore, in this case, a large amount of memory is required to be installed in a computer device, thereby increasing power consumption of the computer device and cost associated with the memory. The present invention can overcome such disadvantages.

Although the above description has illustrated the example of collation using the image feature of the sand-pear-skin pattern, the present invention is not limited thereto. For example, the clustering processing unit 12 may use sand-pear-skin pattern images themselves instead of the image features.

### < First example >

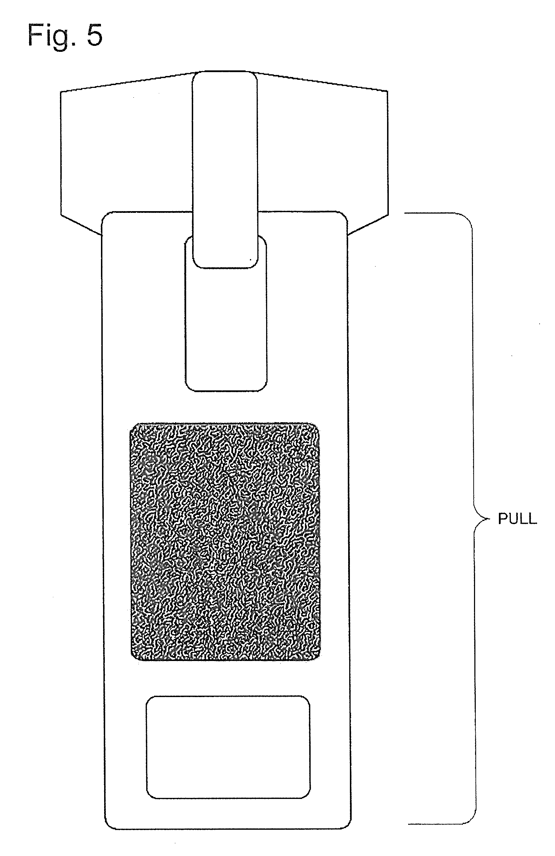

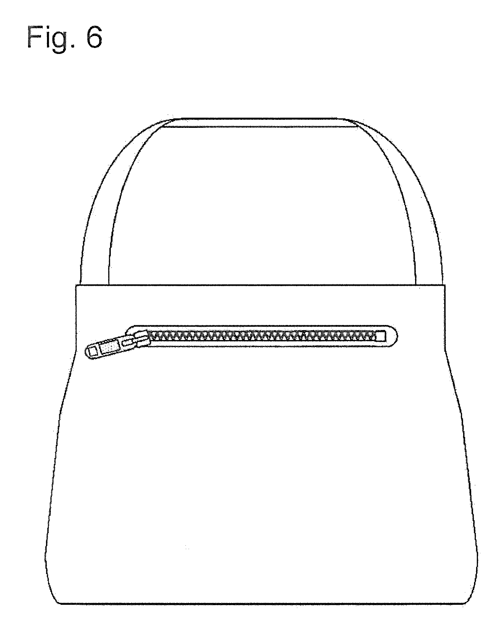

A First example will be described, as depicted in Fig. 5, by an example of using a slide fastener as a component, a sand-pear-skin pattern as a pattern, and furthermore, an entire sand-pear-skin pattern of a concave portion on a pull of the slide fastener as a predetermined region, although not limited thereto. Further, as depicted in Fig. 6, a bag equipped with the slide fastener will be exemplified as a product, but the product is also not particularly limited. Furthermore, the distribution information will be described using a customs clearance location as the distribution circumstances information.

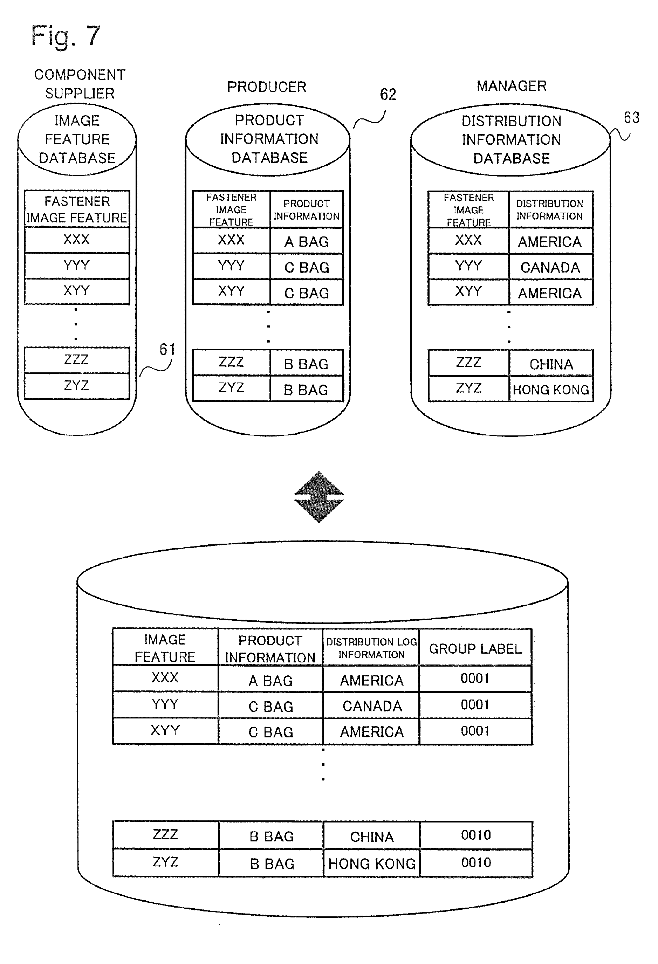

Fig. 7 is a diagram illustrating processing to generate data of the distribution log database 11 in the First example.

A component supplier acquires an image on the predetermined region of the slide fastener upon manufacturing or shipping of the component, and then generates an image feature using the acquired image by a computer, thereby generating data of an image feature database 61.

When equipping a product with the slide fastener supplied from the component supplier, the producer relates the product information of the product with the image feature of the corresponding slide fastener to store the product information, thereby generating data of a product information database 62.

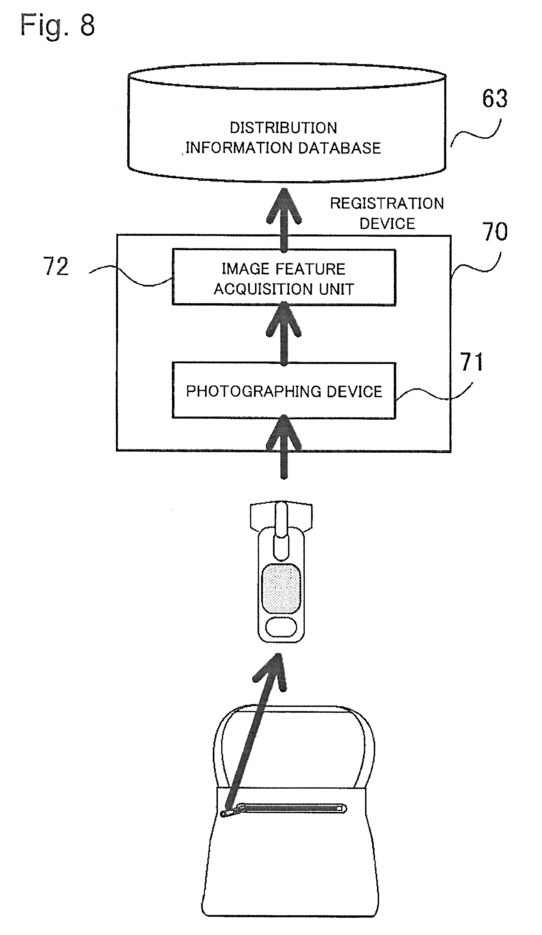

A manager of a customs office or the like uses a registration device 70 depicted in Fig. 8 to generate data of a distribution information database 63. The manager uses the above-mentioned adaptor or the like to capture an image on a predetermined region of the slide fastener of the bag as the product. As a result, an image feature acquisition unit 72 acquires an image feature from the captured image, and then the image feature is stored by relating with information indicating a customs clearance location, thereby generating data of a distribution information database 63.

The distribution management system 1 generates data of the distribution log database 11 by collecting information (data) on the image feature database 61, the product information database 62, and the distribution information database 63. In this stage, no group label number is stored in the distribution log database 11.

The clustering processing unit 12 reads all image features stored in the distribution log database 11, calculates the collation score of each pair of the image features, and performs clustering of the image features based on the calculated collation scores to make grouping of the image features. Then, the clustering processing unit 12 assigns a group label number to each group and relates the group label number with each image feature stored in the distribution log database 11 to store the group label number therein. Fig. 7 depicts a specific example of the distribution log database 11. In this example, a group label number 0001 includes image features XXX, YYY, and XYY, and a group label number 0002 includes image features ZZZ and ZYZ.

The analysis unit 13 analyzes, sequentially in each group formed by the clustering, the distribution log information and the product information related with the image feature belonging to each group by statistical processing and visualizes a result of the analysis. In the example of Fig. 7, the distribution log information and the product information related with the image features belonging to the group label number 0001 are statistically processed to obtain America and Canada as the distribution log information, and A bag and C bag as the product information. In addition, the distribution log information and the product information related with image features belonging to the group label number 0002 are statistically processed to obtain China and Hong Kong as the distribution log information, and B bag as the product information. The analysis unit 13 analyzes the following information obtained the statistical processing:
Group label number 0001: America and Canada; A bag and C bag, and
Group label number 0002: China and Hong Kong; B bag.

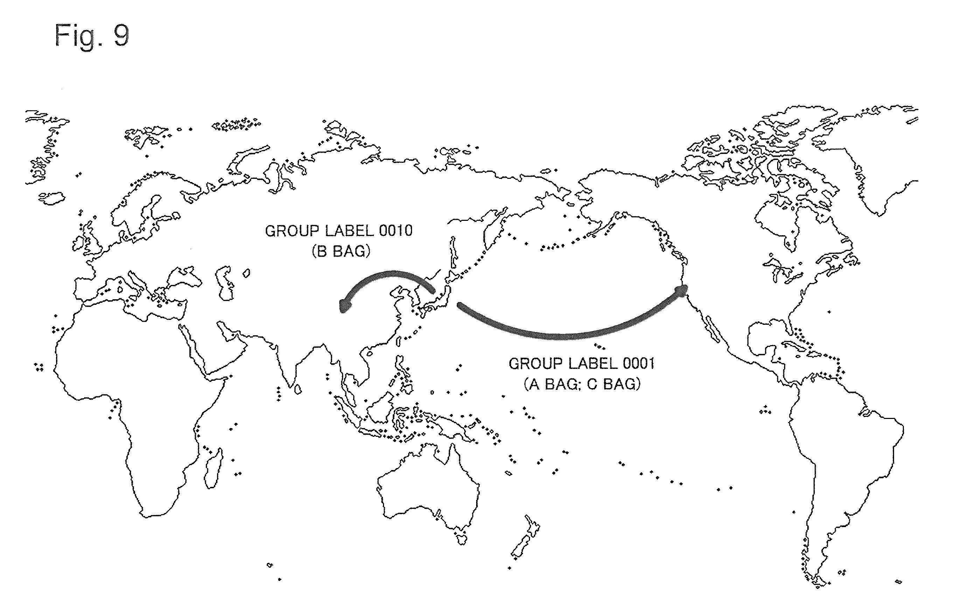

Then, the analysis unit 13 displays a map of a result of the analysis for visualization, as depicted in Fig. 9.

Making analysis after clustering of the product as described above provides the following advantageous effect. For example, in a case that the C bag is found to have a defect after selling the product, it can be seen that, since the C bag belongs to the group label number 0001, it is enough to recall the C bag by announcing to the North America Region that the C bag is a target of recall, based on the map indicating the analysis result.

In addition, making analysis after clustering of the product as above provides the following advantageous effect. For example, when inputting the distribution information using the registration device 70, even if there is something missing in the product information or the distribution information, the above analysis result allows assumption of the product information or the distribution information.

### < Second example >

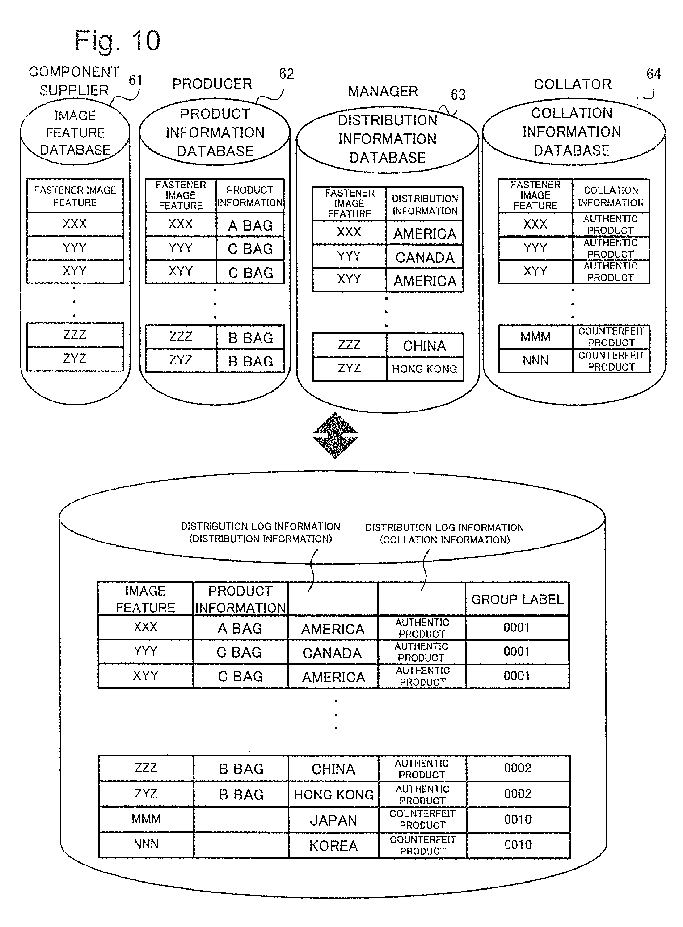

A Second example will be described, as in the First example, by an example of using the slide fastener as the component, the sand-pear-skin pattern as the pattern, and furthermore, the entire sand-pear-skin pattern of the concave portion on the pull of the slide fastener equipped to the bag as the predetermined region. The distribution information of the Second example will be described using a customs clearance location as the distribution circumstances information described in the First example and the collation result as the collation information. Fig. 10 is a diagram illustrating processing for generating data of the distribution log database 11 in the Second example.

The image feature database 61, the product information database 62, and the distribution information database 63 are the same as in the First example and thus a description thereof is omitted. Since the product information database 62 is a database generated by a producer, each image feature of the bag stored in the product information database 62 is image feature of the sand-pear-skin pattern on the predetermined region of the fastener equipped to the bag as an authentic product.

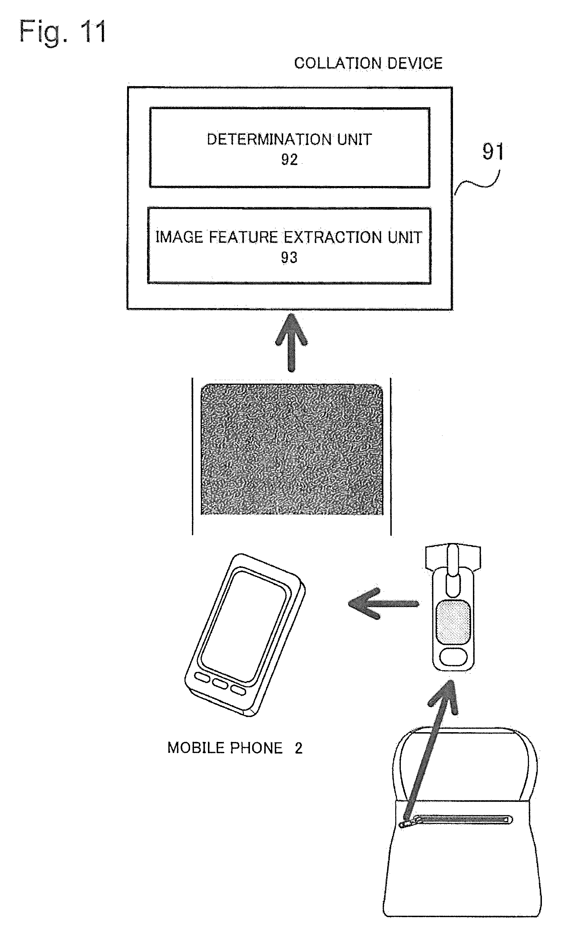

A collator who determines authenticity of a product generates data of a collation information database 64 using a collation system as depicted in Fig. 11. Specifically, the collator first captures the image of the sand-pear-skin pattern on a predetermined region of the slide fastener of the bag as the product by a camera of a mobile terminal 2 using the above-mentioned adaptor or the like, and transmits the captured image to a collation device 91. An image feature extraction unit 93 of the collation device 91 extracts the image feature from the transmitted sand-pear-skin image. Then, a determination unit 92 determines whether or not the same image feature as the extracted image feature is included in the product information database 62 (Yes or No). When the determination is Yes, the determination unit 92 relates information indicating that the product is an authentic product, as collation information, with the extracted image feature, and stores the information in the collation information database 64, thereby generating data of the collation information database 64. On the other hand, when the determination is No, the determination unit 92 relates information indicating that the product is a counterfeit product, as collation information, with the extracted image feature, and stores the information in the collation information database 64, thereby generating data of the collation information database 64.

The distribution management system 1 generates data of the distribution log database 11 as depicted in Fig. 10 by collecting information of the image feature database 61, the product information database 62, the distribution information database 63, and the collation information database 64. In this stage, no group label number is stored in the distribution log database 11.

The clustering processing unit 12 reads all image features stored in the distribution log database 11, calculates the collation score of each of all combinations (pairs) of image features, and performs clustering of the image features based on the calculated collation scores to make grouping of the image features. Then, the clustering processing unit 12 assigns the group label number to each group, relates the group label number with each image feature stored in the distribution log database 11, and store the group label number therein. In Fig. 10, a specific example of the distribution log database 11 is depicted. In this example, a group label number 0001 includes image features XXX, YYY, and XYY, a group label number 0002 includes image features ZZZ and ZYZ, and a group label number 0010 includes image features MMM, NNN, and NAN.

The analysis unit 13 analyzes, sequentially in each group formed by the clustering, the distribution circumstances information and the product information related with the image feature belonging to each group by statistical processing and visualizes a result of the analysis. In the example of Fig. 10, the distribution log information and the product information related with the image features belonging to a group label number 0001 are statistically processed to obtain a result in which as the distribution circumstances information, the collation result information is an authentic product, the distribution information is America and Canada, and the product information is A bag and C bag. Further, the distribution log information and the product information related with the image features belonging to a group label number 0002 are statistically processed to obtain a result in which as the distribution circumstances information, the collation result information is an authentic product, the distribution information is China and Hong Kong, and the product information is B bag. Furthermore, the distribution log information and the product information related with the image features belonging to a group label number 0010 are statistically processed to obtain a result in which as the distribution circumstances information, the collation result is a counterfeit product, the distribution information is Japan and Korea, and the product information is unknown. The analysis unit 13 analyzes the following result obtained by the statistical processing:
Group label number 0001: America and Canada; A bag and C bag; authentic product,
Group label number 0002: China and Hong Kong; B bag; authentic product, and
Group label number 0010: Japan and Korea; unknown and B bag; counterfeit product.

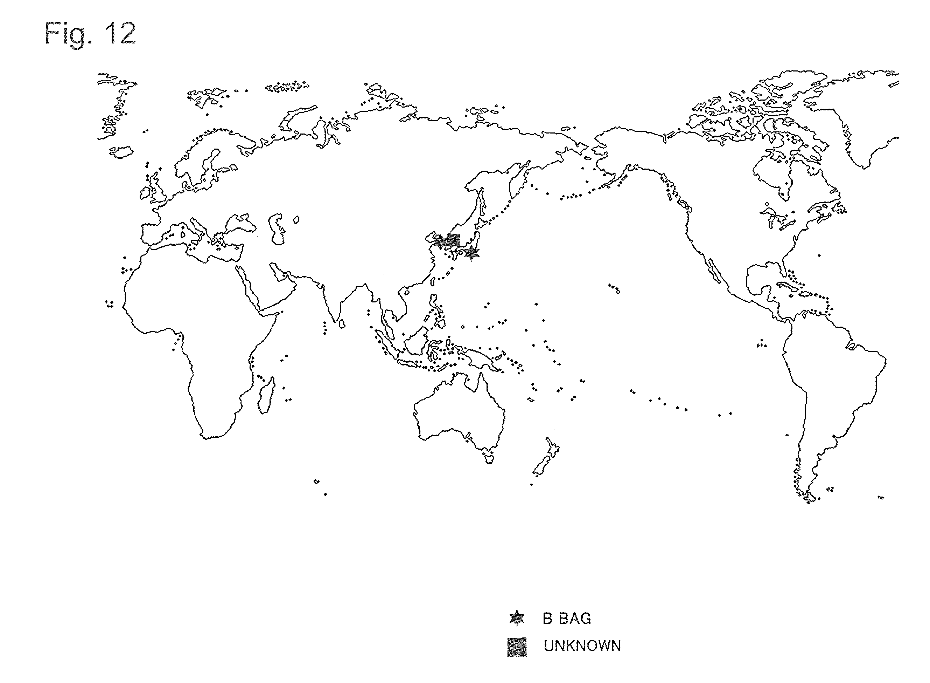

The analysis unit 13 visualizes the result of the analysis. Herein, analysis of the counterfeit product is made to obtain an analysis result in which the counterfeit product is found in Japan and Korea and is mostly B bag. Fig. 12 depicts the analysis result displayed in a map.

The Second example can visualize distribution situation of the counterfeit product, like that the counterfeit product is being distributed in Japan and Korea. This, for example, indicates a country where a counterfeit product is easily brought in and a country where a counterfeit product is likely to be produced, so that the Second example can be helpful to prevent proliferation of a counterfeit product and to enhance prevention of producing a counterfeit product.

Further, making analysis after clustering of the product as described above allows assumption of the product information or the distribution information even if an image is input to the collation device 91 and only the collation information is input.

< Third example >

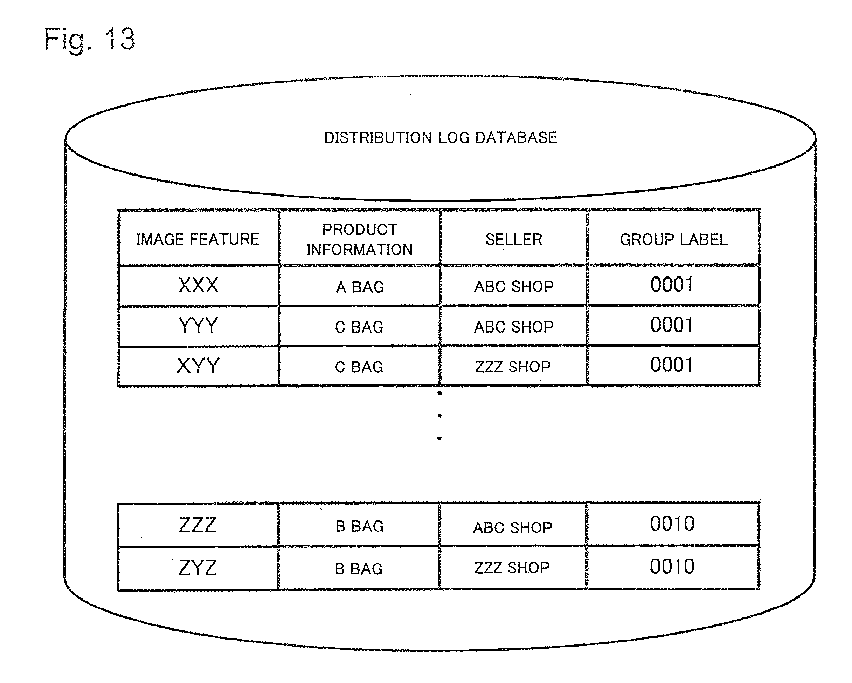

A Third example will be described concerning an example in which seller information is stored instead of the customs clearance location described in the First example. Fig. 13 depicts an example of the distribution log database 11 in the Third example. Description is made assuming that data of the distribution log database 11 is already generated using the method described in the First example.

In the Third example, in a case that a defective component is found, the image feature of the sand-pear-skin pattern of the defective component is acquired. Then, the image feature of the defective component and the image features in the distribution log database 11 are clustered, and the seller information related with the image feature belonging to the same group as the image feature of the defective component are analyzed. This allows early recall of an already shipped product equipped with the defective component. Note that, instead of the seller information, purchaser information can also be stored to obtain the same advantageous effect.

Additionally, when a producer is arrested on suspicion of manufacturing a counterfeit product, it is possible to acquire the image feature of the sand-pear-skin pattern of a component manufactured by the producer or a component equipped to a product produced by the producer and to investigate another crime of the producer based on the image feature. In this case, the investigation of another crime by the producer can be made by clustering the acquired image feature and the image features in the distribution log database 11 and then analyzing distribution log information on a seller and the like related with the image feature belonging to the same group as the acquired image feature.

### < Fourth example >

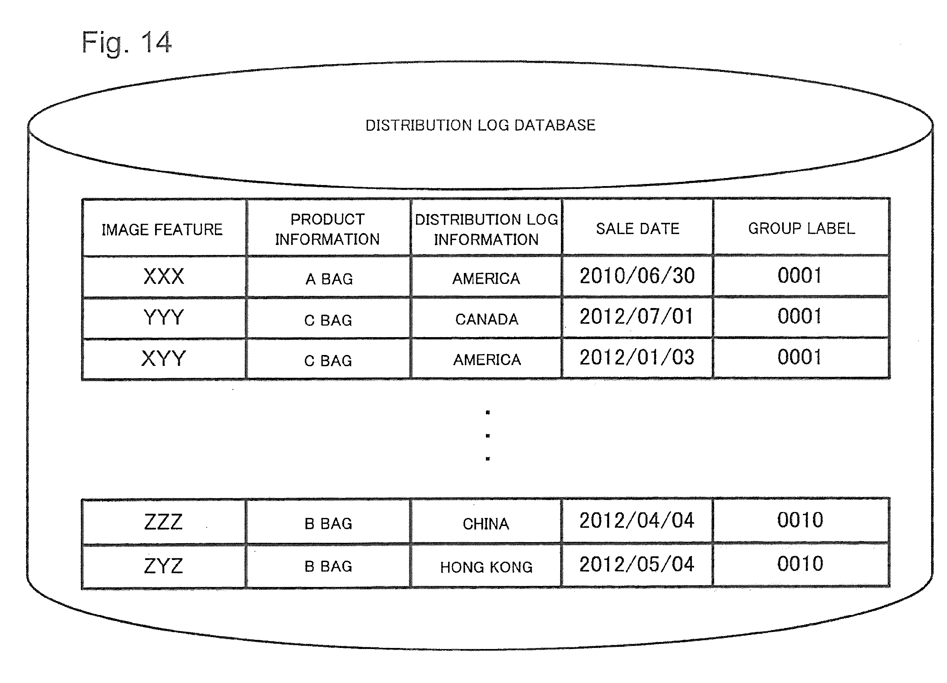

A Fourth example will be described concerning an example in which, as distribution information, sale date information is stored in addition to the customs clearance location described in the First example. Fig. 14 depicts an example of the distribution log database 11 in the Fourth example. Herein, description is made assuming that data of the distribution log database 11 is already generated using the method described in the First example.

The analysis unit 13 visualizes a result obtained by statistically processing product sale in each country for a predetermined period.

Use of an analysis result by the Fourth example allows, for example, a producer of a product to know a market trend. Accordingly, in order to adjust an amount of production of a component or an amount of production of a product, the producer can use the result visualized by the Fourth example for adjustment of operation rate, such as increase or decrease in the numbers of manufacturing devices and workers. Furthermore, the analysis result by the Fourth example can be used for adjustment of shipping destination. In addition, the analysis result by the Fourth example allows the producer to grasp a seasonal sales trend.

The terminal of the above-described present invention can be formed by hardware, as obvious from the description as above, but can also be achieved by a computer program.

In a case of such a structure, the terminal includes a processor and a program memory, and the processor operated with a program stored in the program memory achieves the same functions and operations as the clustering processing unit and the analysis unit in the above-described exemplary embodiment. Some of the functions of the exemplary embodiment described above can also be achieved by a computer program.

While the exemplary embodiment and the examples have been illustrated hereinabove to describe the present invention, the present invention is not necessarily limited to the above-described exemplary embodiment and examples, and can be modified in various forms to be implemented within the scope of the technical concept thereof.

### (Supplementary note 1)

A product management method comprising:
clustering a distribution information log database in which an image feature of a pattern formed on a surface of a component is related with at least one of product information regarding a product equipped with the component and distribution information regarding distribution of the product, based on the image feature; and
analyzing, using statistical processing, one or both of the distribution information and product information related with the image feature belonging to each group obtained by the clustering.

(Supplementary note 2)

The product management method according to Supplementary note 1, wherein the image feature is a pattern on a predetermined region, generated in a production process of the component.

### (Supplementary note 3)

The product management method according to Supplementary note 1 or 2, wherein the pattern is a sand-pear-skin pattern formed on the component.

### (Supplementary note 4)

The product management method according to Supplementary note 2 or 3, wherein the predetermined region is a concave portion of the component.

### (Supplementary note 5)

The product management method according to any one of Supplementary notes 1 to 4, wherein the component is a casting product made by a mold.

### (Supplementary note 6)

The product management method according to Supplementary note 5, wherein the fastening component is at least any one of fastening components of a slide fastener, a hook-and-loop fastener, a snap fastener, a rail fastener, a buckle, a cord stopper, a belt adjuster, a loop clutch, a snap button, and a button.

### (Supplementary note 7)

The product management method according to any one of the Supplementary notes 1 to 6, wherein the pattern is intentionally provided on an article for performing statistical processing.

### (Supplementary note 8)

A product management device includes
a distribution information log database in which an image feature of a pattern formed on a surface of a component is related with at least one of product information regarding a product equipped with the component and distribution information regarding distribution of the product;
clustering processing means that performs clustering of the distribution information log database based on the image feature; and
an analysis unit that, using statistical processing, analyzes one or both of the distribution information and the product information related with the image feature belonging to each group obtained by the clustering.

### (Supplementary note 9)

The product management device according to Supplementary note 8, wherein the image feature is a pattern on a predetermined region, generated in a production process of the component.

### (Supplementary note 10)

The product management device according to Supplementary note 8 or 9, wherein the pattern is a sand-pear-skin pattern formed on the component.

### (Supplementary note 11)

The product management device according to Supplementary note 9 or 10, wherein the predetermined region is a concave portion of the component.

### (Supplementary note 12)

The product management device according to any one of Supplementary notes 8 to 11, wherein the component is a casting product made by a mold.

### (Supplementary note 13)

The product management device according to Supplementary note 12, wherein the fastening component is at least any one of fastening components of a ride fastener, a hook-and-loop fastener, a snap fastener, a rail fastener, a buckle, a cord stopper, a belt adjuster, a loop clutch, a snap button, and a button.

### (Supplementary note 14)

The product management device according to any one of the Supplementary notes 8 to 13, wherein the pattern is intentionally provided on an article for performing statistical processing.

### (Supplementary note 15)

A product management system includes
a distribution information log database in which an image feature of a pattern formed on a surface of a component is related with at least one of product information regarding a product equipped with the component and distribution information regarding distribution of the product;
clustering processing means that performs clustering of the distribution information log database based on the image feature; and
an analysis unit that, using statistical processing, analyzes one or both of the distribution information and the product information related with the image feature belonging to each group obtained by the clustering.

### (Supplementary note 16)

The product management system according to Supplementary note 15, wherein the image feature is a pattern on a predetermined region, generated in a production process of the component.

### (Supplementary note 17)

The product management system according to Supplementary note 15 or 16, wherein the pattern is a sand-pear-skin pattern formed on the component.

### (Supplementary note 18)

The product management system according to Supplementary note 16 or 17, wherein the predetermined region is a concave portion of the component.

### (Supplementary note 19)

The product management system according to any one of Supplementary notes 15 to 18, wherein the component is a casting product made by a mold.

### (Supplementary note 20)

The product management system according to Supplementary note 19, wherein the fastening component is at least any one of fastening components of a ride fastener, a hook-and-loop fastener, a snap fastener, a rail fastener, a buckle, a cord stopper, a belt adjuster, a loop clutch, a snap button, and a button.

### (Supplementary note 21)

The product management system according to any one of the Supplementary notes 15 to 20, wherein the pattern is intentionally provided on an article for performing statistical processing.

### (Supplementary note 22)

A program for a product management device, the program causing the product management device to execute:
processing to perform clustering of a distribution information log database in which an image feature of a pattern formed on a surface of a component is related with at least one of product information regarding a product equipped with the component and distribution information regarding distribution of the product, based on the image feature; and
processing to, using statistical processing, analyze one or both of distribution information and product information related with an image feature belonging to each group obtained by the clustering.

This application is based upon and claims the benefit of priority from Japanese patent application No. 2012-172700, filed on August 3, 2012, the disclosure of which is incorporated herein in its entirety by reference.

### [Reference Signs List]

- 1: management system
- 11: distribution log database
- 12: clustering processing unit
- 13: analysis unit
- 70: registration device
- 71: photographing device
- 72: image feature acquisition unit
- 91: collation device
- 92: determination unit
- 93: image feature extraction unit

## Claims

1. A product management method comprising:
clustering a distribution information log database in which an image feature of a pattern formed on a surface of a component is related with at least one of product information regarding a product equipped with the component and distribution information regarding distribution of the product, based on the image feature; and
analyzing, using statistical processing, one or both of the distribution information and product information related with the image feature belonging to each group obtained by the clustering.

2. The product management method according to Claim 1, wherein the image feature is a pattern on a predetermined region, generated in a production process of the component.

3. The product management method according to Claim 1 or 2, wherein the pattern is a sand-pear-skin pattern formed on the component.

4. The product management method according to Claim 2 or 3, wherein the predetermined region is a concave portion of the component.

5. The product management method according to any one of Claims 1 to 4, wherein the component is a casting product made by a mold.

6. The product management method according to Claim 5, wherein the fastening component is at least any one of fastening components of a slide fastener, a hook-and-loop fastener, a snap fastener, a rail fastener, a buckle, a cord stopper, a belt adjuster, a loop clutch, a snap button, and a button.

7. A product management device comprising:
a distribution information log database in which an image feature of a pattern formed on a surface of a component is related with at least one of product information regarding a product equipped with the component and distribution information regarding distribution of the product;
clustering processing means that performs clustering of the distribution information log database based on the image feature; and
an analysis unit that, using statistical processing, analyzes one or both of the distribution information and the product information related with the image feature belonging to each group obtained by the clustering.

8. The product management device according to Claim 7, wherein the image feature is a pattern on a predetermined region, generated in a production process of the component.

9. The product management device according to Claim 7 or 8, wherein the pattern is a sand-pear-skin pattern formed on the component.

10. The product management device according to Claim 8 or 9, wherein the predetermined region is a concave portion of the component.

11. The product management device according to any one of Claims 7 to 10, wherein the component is a casting product made by a mold.

12. The product management device according to Claim 11, wherein the fastening component is at least any one of fastening components of a ride fastener, a hook-and-loop fastener, a snap fastener, a rail fastener, a buckle, a cord stopper, a belt adjuster, a loop clutch, a snap button, and a button.

13. A product management system comprising:
a distribution information log database in which an image feature of a pattern formed on a surface of a component is related with at least one of product information regarding a product equipped with the component and distribution information regarding distribution of the product;
clustering processing means that performs clustering of the distribution information log database based on the image feature; and
an analysis unit that, using statistical processing, analyzes one or both of the distribution information and the product information related with the image feature belonging to each group obtained by the clustering.

14. The product management system according to Claim 13, wherein the image feature is a pattern on a predetermined region, generated in a production process of the component.

15. The product management system according to Claim 13 or 14, wherein the pattern is a sand-pear-skin pattern formed on the component.

16. The product management system according to Claim 14 or 15, wherein the predetermined region is a concave portion of the component.

17. The product management system according to any one of Claims 13 to 16, wherein the component is a casting product made by a mold.

18. The product management system according to Claim 17, wherein the fastening component is at least any one of fastening components of a ride fastener, a hook-and-loop fastener, a snap fastener, a rail fastener, a buckle, a cord stopper, a belt adjuster, a loop clutch, a snap button, and a button.

19. A program for a product management device, the program causing the product management device to execute:
processing to perform clustering of a distribution information log database in which an image feature of a pattern formed on a surface of a component is related with at least one of product information regarding a product equipped with the component and distribution information regarding distribution of the product, based on the image feature; and
processing to, using statistical processing, analyze one or both of distribution information and product information related with an image feature belonging to each group obtained by the clustering.
